**Europäisches Patentamt**

**European Patent Office**

**Office européen des brevets**

(11) Veröffentlichungsnummer: **0 671 246 A2**

(12) **EUROPÄISCHE PATENTANMELDUNG**

(21) Anmeldenummer: **95103349.7**

(51) Int. Cl.6: **B25J 9/16**, G05B 19/425

(22) Anmeldetag: **08.03.95**

(30) Priorität: **09.03.94 DE 4407924**

(43) Veröffentlichungstag der Anmeldung:
**13.09.95 Patentblatt 95/37**

(84) Benannte Vertragsstaaten:
**DE IT SE**

(71) Anmelder: **SIEMENS AKTIENGESELLSCHAFT**
**Wittelsbacherplatz 2**
**D-80333 München (DE)**

(72) Erfinder: **Liepert, Bernd, Dipl.-Math.**
**Bernhard Monath-Str. 8**
**D-86405 Meitingen (DE)**
Erfinder: **Schmidt, Wolfgang, Dr.**
**Bechhofener Weg 32**
**D-91315 Höchstadt (DE)**
Erfinder: **Olomski, Jürgen, Dr.**
**Von-Andrechs-Weg 24**
**D-91074 Herzogenaurach (DE)**
Erfinder: **Seeger, Guido, Dr.**
**Friedrich-.Bauer-Str. 40**
**D-91058 Erlangen (DE)**

(54) **Greiferbezogenes Handverfahren.**

(57) Um das Teachen einer Robotersteuerung zu erleichtern, wird dafür gesorgt, daß der Drehpunkt bei Orientierungsänderungen immer im Ursprung eines Basiskoordinatensystems liegt.

*Kontur*

*Bezugspunkt*

FIG 1

EP 0 671 246 A2

Bei der numerisch gesteuerten Bearbeitung von Werkstücken durch eine mehrachsige Maschine, z.B. einen Roboter kann es entscheidende technologische Vorteile bringen, wenn gegenüber der herkömmlichen Bearbeitung bei der das Werkzeug von der Roboterhand über ein ortsfestes Werkstück geführt wird, das Werkzeug ortsfest angebracht und das Werkstück von der Roboterhand über das ortsfeste Werkzeug geführt wird. Für die letztgenannte Bearbeitungsart wird durch die Robotersteuerung eine sogenannte greiferbezogene Interpolation vorgenommen, wogegen bei der herkömmlichen Führung des Werkzeuges über ein ortsfestes Werkstück basisbezogen interpoliert wird.

Die greiferbezogene Interpolation bringt dem Anwender mehrere Vorteile, u. a. wird der Aufbau einfacher, man benötigt nur noch einen Greifer und spart die Einspannvorrichtung für das Werkstück, ein ortsfestes Werkstück unterliegt weniger Beschränkungen in Gewicht und Abmessungen und die Versorgungseinrichtungen für Schweißdraht, Kühlmittel werden deutlich einfacher, da sie nicht über die Roboterarme zugeführt werden müssen. Zweitens erzielt man kürzere Taktzeiten, da man das Werkstück in einem Arbeitsgang ohne Anhalten und Umgreifen heranbringen, bearbeiten und wieder abtransportieren kann.

Aufgabe der Erfindung ist es bei der greiferbezogenen Interpolation das Teachen mit geführtem Werkstück zu erleichtern. Dazu wird eine Variante des kartesisschen Handverfahrens benötigt, bei der Translation und Rotation sich auf das ortsfeste Werkzeug beziehen. Insbesondere muß das Werkzeug, das als Ursprung des Basiskoordinatensystems gewählt wird, der Fixpunkt aller Drehungen sein.

Diese Aufgabe wird durch die Merkmale der Patentansprüche gelöst.

Ein Ausführungsbeispiel der Erfindung wird im folgenden anhand der Zeichnung näher erläutert. Dabei zeigen:

| | |
|---|---|
| FIG 1 | bis FIG 4 Veranschaulichung der greiferbezogenen Interpolation, |
| FIG 5 | die Führung eines an einer Roboterhand angebrachten Werkzeugs über einem ortsfesten Werkstück, |
| FIG 6 | die Führung eines an einer Roboterhand angebrachten Werksktücks über einem ortsfesten Werkzeug, |
| FIG 7 | das Lernen der Bahn mit geführtem Werkzeug, |
| FIG 8 | das Lernen der Bahn mit fest aufgespanntem Werkstück, |
| FIG 9 | das kartesische Handverfahren mit Drehungen um die Achsen des Basissystems, |
| FIG 10a bis FIG 10c | greiferbezogene Handverfahr-Modi im Vergleich. |

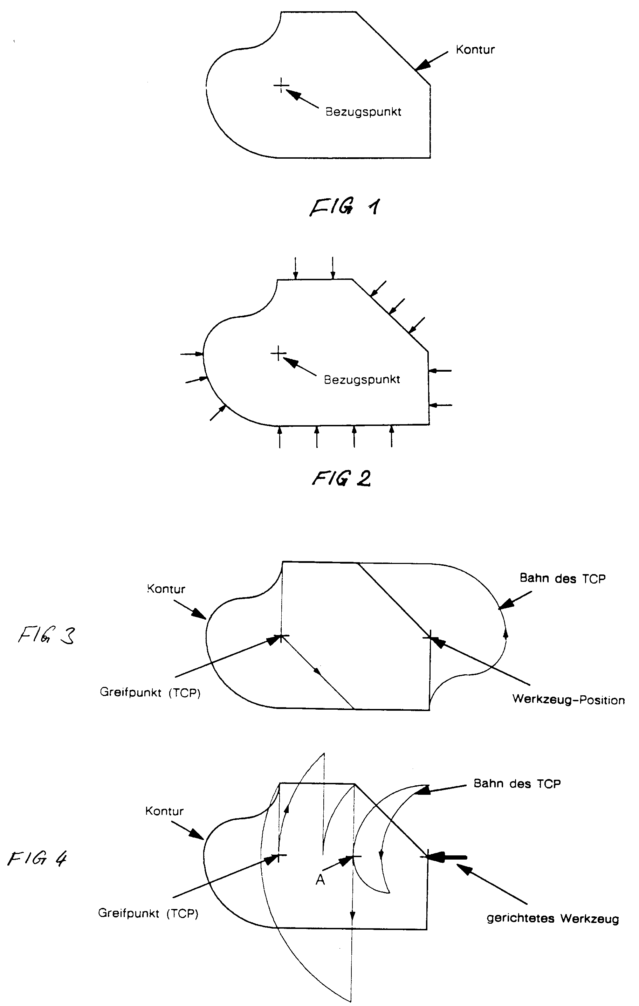

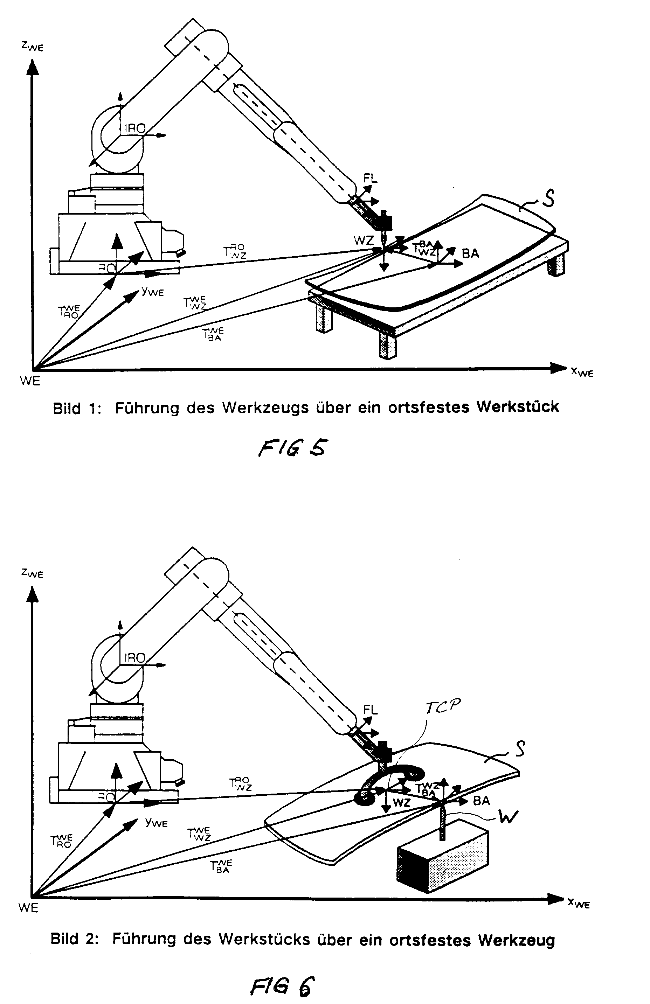

Bevor auf das greiferbezogene Handverfahren eingegangen wird, sei anhand der Figuren 1 bis 4 zunächst das Problem der greiferbezogenen Interpolation veranschaulicht.

Die Frage, wie sich die Roboterhand ändern muß, wenn man nicht das Werkzeug sondern das Werkstück führt, aber die gleiche Relativbewegung zwischen beiden erhalten möchte entzieht sich sehr schnell dem Vorstellungsvermögen. An einem einfachen zweidimensionalen Beispiel, wie es anhand der Figuren 1 bis 4 dargestellt ist, lassen sich einige grundsätzliche Eigenheiten gut klarmachen. FIG 1 zeigt ein Werkstück, dessen Kontur aus geraden Stücken und Kreisabschnitten zusammengesetzt ist. Spannt man dieses Werkstück fest auf, so entspricht die gezeichnete Kontur der Bahn der Werkzeugspitze. Ist das Werkzeug rotationssymmetrisch, läßt sich die Kontur mit einer reinen Translationsbewegung abfahren.

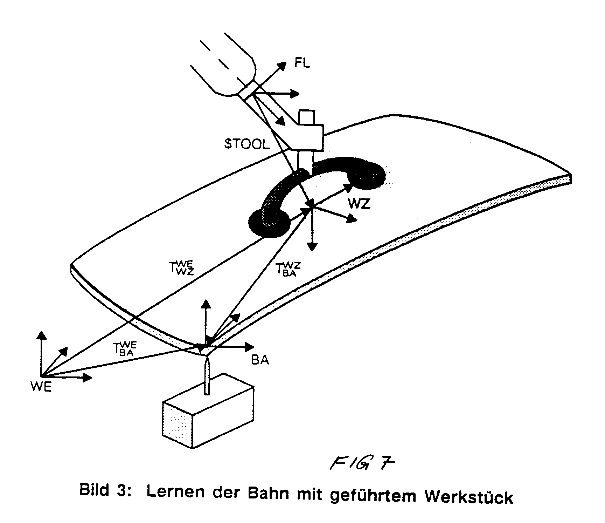

Ein gerichtetes Werkzeug muß dagegen immer eine bestimmte Orientierung zur Kontur einhalten. Die Änderung der Orientierung ist anhand von FIG 2 durch die an der Kontur angreifenden kleinen Pfeile verdeutlicht. Setzt man das Werkzeug fest und bewegt das Werkstück, zeigen diese beiden Fälle sehr verschiedene Auswirkungen auf die Bewegung der Roboterhand. In FIG 3 wird das Werkstück von der Roboterhand im Bezugspunkt ( = Greifpunkt) gegriffen und es wird die Bewegung dieses Punktes betrachtet, die nötig ist, um die Kontur am feststehenden Werkstück entlang zu führen.

Bei rotationssymmetrischen Werkzeug kann die Orientierung des Werkstücks stets beibehalten werden, lediglich der Kontakt zwischen Kontur und Werkzeug ist sicherzustellen. Die resultierende Bewegung entsteht dann einfach durch Spiegelung der Werkstückkontur in der Mitte der Verbindungslinie zwischen Bezugspunkt und Werkzeug. In diesem Fall läßt sich eine greiferbezogen programmierte Bahn offenbar sehr einfach umrechnen. Man muß nur alle Stützpunkte der Bahn spiegeln und kann Abfolge und Länge der Bahnsegmente unverändert beibehalten.

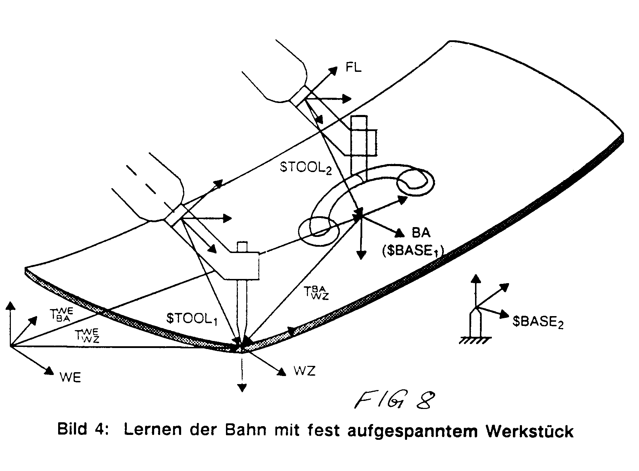

Ein gerichtetes Werkzeug erfordert dagegen eine Umorientierung des Werkstücks während der Bewegung, und die Überlagerung von Verschiebung und Drehung erzeugt eine sehr viel komplexere Bahn des Greifpunktes, wie sie in FIG 4 dargestellt ist.

Die Bahn besteht zwar nach wie vor aus geraden Stücken und Kreisabschnitten, deren Anzahl, Verteilung und Länge hat sich aber deutlich geändert. An allen Ecken der Kontur verharrt das Werkzeug eine Zeit lang am gleichen Punkt, während das Werkstück um diesen Punkt schwenkt. An Punkt A steht dagegen der Greifer still, ändert lediglich seine Orientierung, während der große Radius des Werkstücks

2

am Werkzeug entlang geführt wird.

Durch Ecken in der Kontur entstehen dieselben Probleme, wie bei basisbezogener Interpolation mit einem räumlich ausgedehnten Werkzeug. Erstens muß ein zusätzliches Bahnsegment eingefügt werden, das lediglich der Umorientierung des Werkstücks dient, zweitens kann diese Umorientierung nicht beliebig schnell erfolgen. Je größer der Abstand zwischen Greifpunkt und Werkzeug, desto weiter wird der Weg, den der Greifer zurückzulegen hat. Da die Bahngeschwindigkeit begrenzt ist, muß hierfür eine ausreichend große Zeitspanne eingeplant werden.

In den gezeigten Beispielen werden gerade Stücken auf gerade Stücke abgebildet und Kreissegmente auf Kreissegmente. Dies liegt jedoch nur an der streng konstant gehaltenen Orientierung des Werkzeugs zur Kontur und kann nicht verallgemeinert werden. Im übrigen ist festzuhalten, daß sich die Geschwindigkeit des Greifers auf den Kreissegmenten durch die Abbildung ändert (am deutlichsten an Ecken). Die technologisch wichtigen Geschwindigkeiten können jetzt nur noch greiferbezogen bestimmt werden und zwar aus der Bewegung des Werkzeugs relativ zum werkstückfesten Koordinatensystem.

Bei der Annäherung an das ortsfeste Werkzeug und nach Ende der Bearbeitung bewegt man das Werkstück sinnvollerweise relativ zu einem ortsfesten Koordinatensystem. Man muß daher zwischen beiden Interpolationsarten schnell und möglichst auch fließend mit Hilfe eines Überschleifsatzes umschalten können.

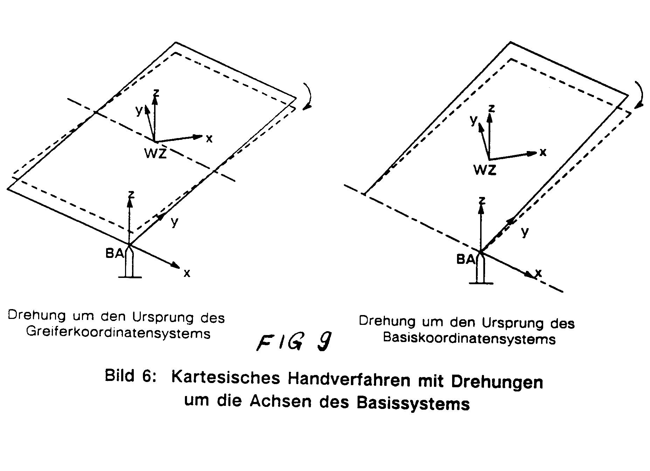

Anhand der Figuren 5 und 6 werden im folgenden die wesentlichen Grundlagen der Interpolation beschrieben. FIG 5 zeigt die Führung des Werkzeugs über ein ortsfestes Werkstück. Die Bewegung des an der Roboterhand befestigten Werkzeugs W über ein ortsfest angebrachtes Werkstück S stellt den "Normalfall" dar, der hier kurz rekapituliert werden soll.

Bei einer bekannten Robotersteuerung kann die Bahn des Werkzeugpunktes, dargestellt durch das Koordinatensystem WZ relativ zu einem frei wählbaren werkstückfesten Basiskoordinatensystem BA angegeben werden. Die Steuerung rechnet diese selbständig um und zwar zunächst auf Weltkoordinaten WE (Inertialkoordinaten), dann auf Roboterfußkoordinaten RO, schließlich auf das roboterinterne Koordinatensystem IRO. Daraus wiederum ermittelt die Rücktransformation die einzustellenden Achssollwerte. Vom Programmierer werden also das Basiskoordinatensystem BA relativ zum Inertialkoordinatensystem WE sowie einige ausgezeichnete Bahnpunkte (wobei ein Bahnpunkt jeweils durch Position und Orientierung des Tool-Center-Points also der Roboterhand bestimmt ist) relativ zu dem Basissystem BA. Die Interpolation arbeitet in Basiskoordinaten und ergänzt somit in Echtzeit die fehlenden Bahnpunkte. Jeder Bahnpunkt muß auf Weltkoordinaten BE umgerechnet werden. Die dazu anzuwendende Gleichung erhält man durch Verfolgen der Transformationskette (Gleichung 1)

$$\mathbf{T}_{WZ}{}^{WE} = \mathbf{T}_{BA}{}^{WE}\ \mathbf{T}_{WZ}{}^{BA} \qquad \text{G1.1}$$

Wobei **T** eine Transformationsmatrix ist, die die Position und Orientierung beschreibt. Das Ergebnis erlaubt die Berechnung der Achssollwerte gemäß Gleichung 2

$$\Theta = K^{-1}(\mathbf{T}_{WZ}{}^{IRO}) = K^{-1}((\mathbf{T}_{RO}{}^{WE}\mathbf{T}_{IRO}{}^{RO})^{-1}\ \mathbf{T}_{WZ}{}^{WE}) \qquad \text{G1.2}$$

wobei $K^{-1}$ für die Rücktransformation steht.

In FIG 6 ist die Führung des Werkstücks über einem ortsfesten Werkzeug dargestellt.

In diesem Fall ist das Werkstück S fest mit der Roboterhand verbunden und wird über das stationäre Werkzeug W, z.B. eine Klebedüse oder eine Schweißvorrichtung geführt. Man möchte die Bahn nach wie vor über einen werkstückfesten Koordinatensystem beschreiben und interpolieren. Da aber jetzt das Werkstück bewegt wird, muß sich auch das Bezugssystem mitbewegen.

Eine einfache und universelle Lösung des Problems besteht darin, das Basissystem BA in das ortsfeste Werkzeug W zu legen und die Bahn als die "Bewegung" dieses Basissystems BA relativ zum Greifpunkt d.h. zum Greiferkoordinatensystem auf dem Werkstück S zu definieren. Die Bahn des Werkzeugs W wird also in werkstückfesten Koordinaten beschrieben. Dies läßt sich durch eine Inversion der basisbezogenen Darstellung erreichen. Anstelle von $\mathbf{T}_{WZ}{}^{BA}$ wird nun $\mathbf{T}_{BA}{}^{WZ} = (\mathbf{T}_{WZ}{}^{BA})^{-1}$ verwendet. Durch Verfolgen der Transformationskette erhält man Gleichung 3

$$\mathbf{T}_{WZ}{}^{WE}\mathbf{T}_{BA}{}^{WZ} = \mathbf{T}_{BA}{}^{WE} \Rightarrow \mathbf{T}_{WZ}{}^{WE} = \mathbf{T}_{BA}{}^{WE}(\mathbf{T}_{BA}{}^{WZ})^{-1} \qquad \text{G1.3}$$

Die Position des Greiferkoordinatensystems WZ dargestellt in Weltkoordinaten, $T_{WZ}{}^{WE}$, wird genauso weiterverarbeitet, wie bei basisbezogener Programmierung. Ist die Bahn in greiferbezogenen Koordinaten angegeben, muß man sie demnach zunächst in diesen Koordinaten interpolieren, was sich nicht von einer Interpolation in einem ortsfesten Basissystem unterscheidet. Das Ergebnis $T_{BA}^{WZ}$ ist jedoch in jedem Interpolationstakt zu invertieren, noch vor der Umrechnung auf Weltkoordinaten $T_{WZ}^{WE}$. Im übrigen sind beide Interpolationsverfahren völlig gleich.

Greiferbezogene PTP-Sätze sind entsprechend zu behandeln. Der Zielpunkt eines solchen Satzes liegt ebenfalls als $T_{BA}^{WZ}$ vor, wird daher zunächst invertiert, dann in roboterinterne kartesische Koordinaten transformiert und schließlich in Achssollwerte. Hier entsteht nur in der Satzaufbereitung ein geringer Zusatzaufwand, die achsspezifische Interpolation kann unverändert bleiben.

Nach diesen Vorbemerkungen wird nun im folgenden auf das erfindungsgemäße Verfahren eingegangen.

## Möglichkeiten der Programmierung

### Darstellung der Bahn

Um für den Anwender möglichst übersichtliche Verhältnisse zu schaffen, sollte die Programmierung der Bahn soweit als möglich Von der "sichtbaren" Geometrie des Werkstücks ausgehen und für bewegtes und ortsfestes Werkstück weitgehend gleich ablaufen. Das einfache zweidimensionale Beispiel in der Einleitung zeigt, daß eine Abspeicherung der Bahn der Roboterhand relativ zum ortsfesten Werkzeug zwar prinzipiell möglich ist (auch sie besteht nur aus Geraden und Kreisbögen), aber sehr unanschaulich wird. Es bleibt also nur die Darstellung der Bahn des Werkzeugs relativ zu einem Punkt auf dem Werkstück, ungeachtet der Tatsache, daß das Werkzeug ortsfest ist.

Neben der größeren Anschaulichkeit hat diese Methode den Vorteil, daß die Bahndefinition nicht nur durch Lernen (Teach-In) mit bewegtem Werkstuck, sondern auch durch Lernen an einem fest aufgespannten Werkstück oder durch Übernahme von CAD-Daten erfolgen kann, wobei die Schnittstelle zur Interpolation stets gleich bleibt.

### Lernen mit geführtem Werkstück

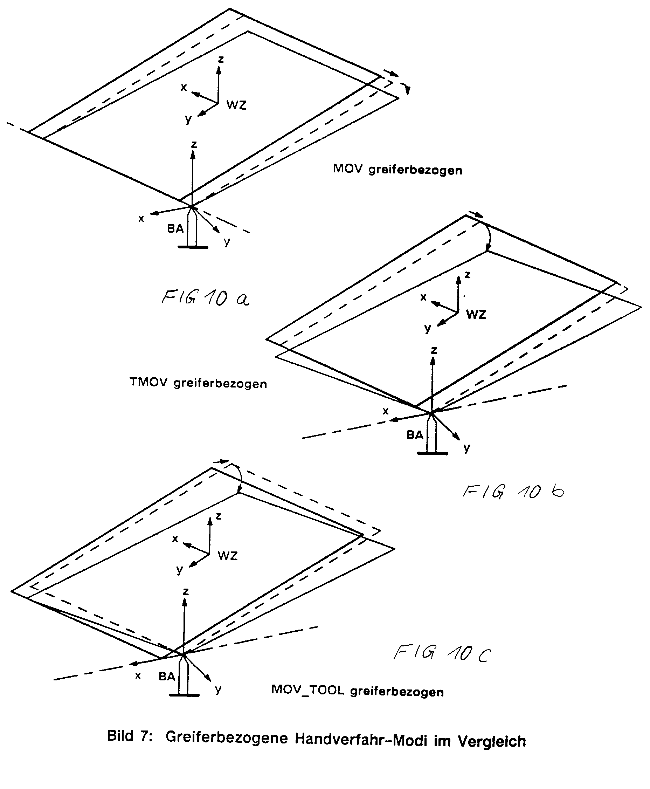

Bei diesem Ansatz wird das Werkstück genauso gegriffen wie bei der späteren Bearbeitung und im Handbetrieb so bewegt, daß charakteristische Punkte der Kontur über das ortsfeste Werkzeug zu stehen kommen (Fig 7) Dabei muß natürlich auch die Orientierung gelernt werden. Der Programmierer spezifiziert außerdem, wie diese Punkte durch CP- oder PTP-Sätze zu verbinden sind. Das Basiskoordinatensystem sollte in das Werkzeug gelegt werden. Abgesehen von der Tatsache, daß Werkzeug- und Basiskoordinatensystem hier ihre Rollen vertauschen, besteht für den Anwender kein Unterschied zur basisbezogenen Programmierung.

An jedem der gelernten Bahnpunkte sind der Steuerung bekannt:
- Position des Werkzeugs in Weltkoordinaten: $T_{BA}^{WE}$
- Position des Greifers (des TCP): $T_{WZ}^{WE}$

Wie beim basisbezogenen Lernen berechnet man daraus die Position des Greiferkoordinatensystems in Bezug auf das Basissystem, also hier in Bezug auf das ortsfeste Werkzeug

$$T_{WZ}^{BA} = (T_{BA}^{WE})^{-1} \, T_{WZ}^{WE}$$

Um den gelernten Punkt in Werkstückkoordinaten zu speichern, muß dieses Ergebnis lediglich invertiert werden

$$T_{BA}^{WZ} = (T_{WZ}^{BA})^{-1} = (T_{WZ}^{WE})^{-1} \, T_{BA}^{WE}$$

Die von der Interpolation erzeugten Bahnpunkte werden ein zweites Mal invertiert, so daß sich insgesamt genau die gelernte Bahn ergibt.

Sollte das Werkzeug nicht wirklich ortsfest sein, sondern z.B. durch Zusatzachsen bewegt werden, ist $T_{BA}^{WE}$ ebenfalls abzuspeichern, um eine spätere Interpolation der Werkzeugbewegung zu ermöglichen.

Die Bahn könnte auch auf ein anderes werkstückfestes Koordinatensystem als das des Greifers umgerechnet und in diesem Format gespeichert werden. Für das Lernen und die spätere Interpolation würde das jedoch keine Vorteile bringen.

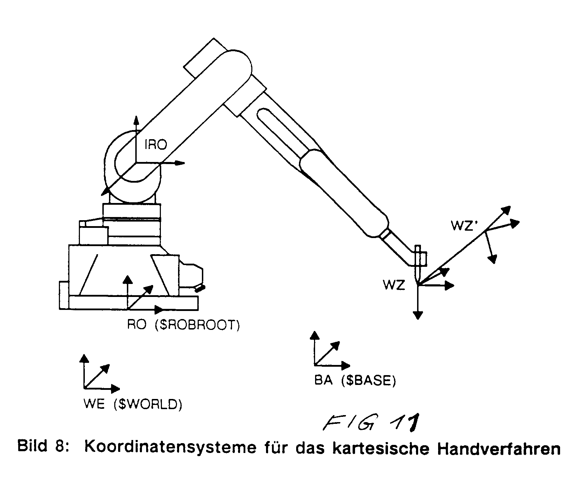

## Lernen mit feststehendem Werkstück (FIG 8)

Das Lernen mit geführtem Werkstück kann gelegentlich als "unhandlich" erscheinen. Normalerweise wird beim kartesischen Handverfahren stets der Ursprung des Greiferkoordinatensystems als Bezugspunkt für Verschiebungen und Drehungen verwendet, um die Hand relativ zu einem ortsfesten Werkstück leicht positionieren zu können. Ist dies der einzige vorgesehene Handverfahr-Modus, muß der Programmierer bei Änderungen der Orientierung eines großen Werkstücks möglicherweise ungewohnt schnelle Relativbewegungen zwischen Werkzeug und Kontur beherrschen. Außerdem kann er bei einem aufwärts gerichteten, fest montierten Werkzeug sein Arbeitsfeld manchmal schlecht überblicken, so daß ein exaktes Lernen schwierig wird.

Zur Erleichterung solcher Aufgaben kann die Bahn auch an einem fest montierten Muster-Werkstück definiert werden. Es geht schließlich nur darum, die Bahn in einem bekannten, werkstückfesten Koordinatensystem zu beschreiben, nach Möglichkeit in demselben System, das später als Greiferkoordinatensystem verwendet wird.

Während des Lernvorganges befestigt man an der Roboterhand sinnvollerweise einen "Zeiger" mit bekannten Abmessungen, so daß die Position des in diesen Zeiger gelegten Werkzeugkoordinatensystem relativ zum Inertialsystem, $T_{WZ}^{WE}$, jederzeit aus den Achsstellungen berechnet werden kann.

Das Muster-Werkstück wird so aufgespannt, daß die Position des Basiskoordinatensystems, in dem die Bahn definiert wird, in Bezug auf die Weltkoordinaten bekannt ist ($T_{BA}^{WE}$).

Die zu lernenden Punkte werden mit dem "Zeiger" angefahren; aus den bekannten Positionen des Greifers und des Werkstücks in Weltkoordinaten berechnet man die Position des Greifers in Werkstückkoordinaten

$$T_{WZ}^{BA} = (T_{BA}^{WE})^{-1} \, T_{WZ}^{WE}$$

und speichert dies als Bahnstützpunkt ab. Bis hierher unterscheidet sich die Vorgehensweise von jedem "normalen" Lernvorgang nur dadurch, daß noch nicht das endgültige Werkzeug bzw. der endgültige Greifer verwendet wird.

Beim Bearbeitungsvorgang werden die so gelernten Daten lediglich anders interpretiert. Anstelle des "Zeigers" wird nun das Werkstück an der Hand befestigt, als "Werkzeugkoordinatensystem" (Greiferkoordinatensystem) wird nun das Bezugssystem der Bahn verwendet. Die geänderte Lage dieses Koordinatensystems relativ zum Flansch ist der Steuerung mitzuteilen. Das Basissystem BA wird nun in das ortsfeste Werkzeug gelegt auch diese Änderung muß der Steuerung bekanntgemacht werden.

Die relativ zum Basissystem gelernte Bahn wird nun genauso verwendet, als sei sie von vornherein relativ zum Greiferkoordinatensystem definiert worden, d.h. die als $T_{WZ}^{BA}$ abgespeicherten Punkte werden nun als $T_{BA}^{WZ}$ interpretiert, ohne an den Zahlenwerten etwas zu ändern.

Die Bahndefinition am fest montierten Werkstück nutzt den Roboter als Meßmaschine. Da bei diesem Verfahren während der Bearbeitung die Hand nicht auf der gleichen Bahn fährt wie bei der Programmierung (vgl. das Beispiel in der Einleitung), stellt es höhere Anforderungen an die absolute Genauigkeit des Roboters, des Werkstückes und der Aufspannung als das Lernen mit geführtem Werkstück. Hinzu kommen unterschiedliche Durchbiegungen des Arms durch die verschiedenen Traglasten bei Programmierung und Bearbeitung sowie eine Verformung des Werkstücks durch die veränderte Lage.

## Ergänzende Bemerkungen

Das basisbezogene Lernen (Teach-In) orientiert sich an folgenden Grundsätzen:

1. Es wird immer die Position des Greiferkoordinatensystems relativ zum Basissystem $BASE abgespeichert ($T_{WZ}^{BA}$ = $POS__ACT).

2. Dazu wird das *aktuell eingestellte* Basissystem herangezogen. Der Anwender muß selbst dafür sorgen, daß bei der späteren Programmbearbeitung dieselbe oder eine definiert veränderte Basis eingestellt wird.

3. Istwerte werden entweder achsspezifisch oder kartesisch angezeigt. Die kartesische Darstellung bezieht sich auf $BASE.

4. Die gelernte Position darf auch einem Frame zugewiesen werden (z. B. $BASE), um ein neues Bezugskoordinatensystem zu definieren.

5. Es ist vorgesehen, über eine "Voreinstellungs"-Maske nur ausgewählte Komponenten einer Position zu übernehmen. Die anderen sind dann als "nicht initialisiert" gekennzeichnet (Lücken) und müssen während der Bewegungsplanung ergänzt werden.

6. Durch Lernen können Aggregate (strukturierte Konstanten) oder Variablen aus Datenlisten festgelegt werden. Letztere werden wie initialisierte Variable behandelt, sind bei der Programmbearbeitung also schreibgeschützt.

Für das greiferbezogene Lernen (mit geführtem Werkstück) folgt in konsequenter Fortsetzung dieses Konzepts:

1. Neben dem Basissystem $BASE muß nun auch der "Interpolationsmodus" (basisbezogen oder greiferbezogen) beachtet werden.

2. Im greiferbezogenen Betrieb wird die Position des Basissystems relativ zum Greiferkoordinatensystem, also $T_{BA}^{WZ}$ abgespeichert.

3. Dazu werden das *aktuell eingestellte* Basissystem und der *aktuell eingestellte* Interpolationsmodus herangezogen. Der Anwender muß selbst dafür sorgen, daß bei der späteren Programmbearbeitung die gleichen oder definiert veränderte Verhältnisse vorliegen.

4. Die Anzeige der Istwerte erfolgt entweder achsspezifisch oder kartesisch, die kartesische Darstellung zeigt bei greiferbezogener Interpolation die Position des Basissystems relativ zum Greiferkoordinatensystem, also $T_{BA}^{WZ}$.

5. Beim Füllen nicht initialisierter Komponenten, die durch die Voreinstellungs-Maske entstehen können, muß die Bewegungsplanung beachten, daß die vorhergehende Position eventuell noch basisbezogen angefahren wurde und daher erst auf greiferbezogene Darstellung umgerechnet werden muß.

Im übrigen kann das Konzept für basisbezogenes Verfahren beibehalten werden.

## Kartesisches Handverfahren

## Bezugssysteme für Translation und Rotation

Zur Beschleunigung des Lernvorgangs (Teachen) mit geführtem Werkstück wird mindestens eine weitere Variante des kartesischen Handverfahrens benötigt, bei der Translation und Rotation sich auf das ortsfeste Werkzeug beziehen. Insbesondere muß das Werkzeug, also der Ursprung des Basissystems, der Fixpunkt aller Drehungen sein. Die bisher in der ACR vorgesehenen Handverfahr-Modi erlauben zwar Orientierungsänderungen relativ zum Basissystem, halten dabei aber den Ursprung des Greiferkoordinatensystems (Arbeitspunkt) fest, d.h. für Drehungen wird nur die Richtung der Koordinatenachsen des Basissystems ausgewertet nicht aber seine Position. FIG 9 verdeutlicht den Unterschied am Beispiel einer Drehung um die x-Achse des Basissystems.

Wie man sofort erkennt, wird durch Drehungen um den Ursprung des Basiskoordinatensystems die Programmierung sehr erleichtert, da Position und Orientierung des Werkstücks direkt am Werkzeug voneinander entkoppelt sind.

Tabelle 1 stellt die bisher vorgesehenen Handverfahr-Modi der ACR zusammen. Intern werden drei Fälle unterschieden:

1. Translation längs der Achsen eines ortsfesten Koordinatensystems und Rotation um die Achsen desselben System, allerdings bei festgehaltenem Arbeitspunkt (MOV, der oben beschriebene Fall, Bild 6 links),

2. Translation längs der Achsen eines ortsfesten Koordinatensystems, Rotation um die Achsen des Greiferkoordinatensystems (TMOV),

3. Translation und Rotation längs der bzw. um die Achsen des Greiferkoordinatensystems (MOV_TOOL).

| Bezugssystem | Rotation | | | |
|---|---|---|---|---|
| Translation | WORLD | BASE | ROBROOT | TCP |
| WORLD | MOV | | | TMOV |
| BASE | | MOV | | TMOV |
| ROBROOT | | | MOV | TMOV |
| TCP | | | | MOV_TOOL |

**Tabelle 1: Varianten des kartesischen Handverfahrens**

Um die gewünschte Wirkung, nämlich Drehungen um den Ursprung des Basissystems, zu erzielen, hat man nun zwei Möglichkeiten: Man interpoliert basisbezogen oder greiferbezogen.

*Basisbezogenes Handverfahren*

Beschränkt man sich ausschließlich auf basisbezogene Handverfahr-Modi, muß ein vierter Fall eingeführt werden (im folgenden mit BMOV bezeichnet):
4. Translation längs der Achsen eines ortsfesten Koordinatensystems und Rotation um die Achsen desselben System, wobei diese als feststehende Drehachsen zu interpretieren sind, also nicht nur die Drehrichtung angeben (Bild 6 rechts).
Grundsätzlich sind dieselben Bezugskoordinatensysteme zulässig wie in den ersten beiden Fällen. Die Verwendung von $WORLD und $ROBROOT dürfte allerdings keinen praktischen Nutzen bringen. Es ist daher zu überlegen, ob dieser Modus auf $BASE eingeschränkt werden muß (z. B. aus Sicherheitsgründen). Eine solche zusätzliche Fallunterscheidung dürfte andererseits einen höheren Implementierungsaufwand bedeuten, da das bisherige, regelmäßige Schema durchbrochen würde.
Im Hinblick auf Zustandsübergänge, z. B. vom Programm-Modus in den Kommando-Modus und zurück, kann die gleiche Strategie verwendet werden wie beim gewöhnlichen kartesischen Handverfahren.

*Greiferbezogenes Handverfahren*

"Greiferbezogenes Handverfahren" steht hier *nicht* für den oben beschriebenen Fall MOV_TOOL, in dem Translation und Rotation des Greifers anhand der Ausrichtung des Greiferkoordinatensystems berechnet werden (relativ zum Basiskoordinatensystem).Vielmehr wird nun die Bewegung des *Basissystems* relativ zum Greiferkoordinatensystem über die Handverfahrtasten vorgegeben.
Durch diesen Wechsel des Blickwinkels erhält man zu jedem der drei bereits definierten Modi eine neue, greiferbezogene Variante. Alle drei erfüllen das Kriterium, daß bei Orientierungsänderungen der Arbeitspunkt, der nun im Basissystem angesiedelt ist, konstant bleibt. Sie unterscheiden sich in der Wahl der Bezugssysteme für Translation und Rotation (FIG 10a - 10c)
1. Translation (des Basiskoordinatensystems) längs der Achsen des Greiferkoordinatensystems und Rotation um die Achsen desselben Systems, bei festgehaltenem Arbeitspunkt (MOV greiferbezogen),
2. Translation längs der Achsen des Greiferkoordinatensystems, Rotation um die Achsen des Basiskoordinatensystems (TMOV greiferbezogen),
3. Translation und Rotation längs der bzw. um die Achsen des Basiskoordinatensystems (MOV_TOOL greiferbezogen). Dies entspricht nahezu dem basisbezogenen Modus BMOV.
Ein Vorteil dieses Ansatzes besteht darin, daß mit geringem Aufwand drei Handverfahr-Modi zur Verfügung stehen, basisbezogene und greiferbezogene Interpolation werden auch im Handbetrieb gleichberechtigt behandelt. Außerdem ist bei einer Unterbrechung eines greiferbezogen interpolierten Satzes automatisch ein Handverfahr-Modus eingestellt, der das Basiskoordinatensystem als Arbeitspunkt betrachtet und somit alle Drehungen um diesen Punkt erfolgen läßt. Wie bei der Diskussion von Einzelsätzen im Kommando-Modus noch klarer werden wird, erreicht man auf diesem Weg ein homogenes System.

Als möglicher Nachteil ist festzuhalten, daß alle Bewegungen für den ortsfesten Beobachter in entgegengesetzter Richtung erfolgen. Wenn etwa das (ortsfeste) Werkzeug in positiver x-Richtung des Greiferkoordinatensystems verschoben werden soll, muß sich der Greifer in negativer x-Richtung bewegen. Für den Programmierer kann dies gewöhnungsbedürftig sein. Auf jeden Fall muß er durch eine entsprechende, greiferbezogene Istwert-Anzeige unterstützt werden.

**Mathematische Formulierung der Interpolation mit homogenen Transformationen**

Ziel dieses Abschnittes ist eine einheitliche Ableitung der Gleichungen für die verschiedenen Handverfahr-Modi. Dabei steht die Übersicht im Vordergrund; die konkret zu implementierenden Gleichungen folgen erst im nächsten Abschnitt. Ferner wird zunächst nur das rein basisbezogene Handverfahren betrachtet. Der Übergang auf greiferbezogene Darstellung ist dann relativ einfach und wird in Abschnitt 4.4 besprochen.

Alle für das Handverfahren relevanten Koordinatensysteme sind in FIG 11 zusammengestellt. Im folgenden steht BEZ für ein beliebiges ortsfestes Bezugssystem ($WORLD, $BASE, $ROBROOT), IRO für das roboterinterne Koordinatensystem, auf das alle kartesischen Sollwerte vor der Rücktransformation umgerechnet werden müssen, und WZ für das Greiferkoordinatensystem, das bei der Interpolation fortlaufend neu berechnet wird. WZ' gibt die Lage des Greiferkoordinatensystems im nächsten Interpolationstakt an.

Beim kartesischen Handverfahren werden die drei Koordinaten x, y, z und die Roll-, Pitch- und Yaw-Winkel (RPY-Winkel) A, B, C interpoliert (bei Robotern mit weniger als sechs Freiheitsgraden entfallen einzelne Winkel). Die Frage, wie diese Koordinaten in jedem Interpolationsschritt bestimmt werden, sei zunächst zurückgestellt.

Ausgehend von den für einen Abtastschritt gültigen Differenzen $\Delta x$, $\Delta y$, $\Delta z$, $\Delta A$, $\Delta B$, $\Delta C$ kann man eine homogene Translations- und eine Rotationsmatrix angeben, die zusammengenommen das Koordinatensystem WZ in das System WZ' überführen:

$$\text{Trans} (\ \Delta x, \ \Delta y, \ \Delta z\ ) \ = \ \begin{bmatrix} 1 & 0 & 0 & \Delta x \\ 0 & 1 & 0 & \Delta y \\ 0 & 0 & 1 & \Delta z \\ 0 & 0 & 0 & 1 \end{bmatrix} \ \equiv \ \left[ \begin{array}{ccc|c} & & & \Delta \underline{p} \\ & \underline{\underline{I}} & & \\ \hline 0 & 0 & 0 & 1 \end{array} \right]$$

$$\text{Rot} (\ \Delta A, \ \Delta B, \ \Delta C\ ) \ = \ \left[ \begin{array}{c|c} & 0 \\ \text{RPY}(\Delta A, \Delta B, \Delta C) & 0 \\ & 0 \\ \hline 0 \quad 0 \quad 0 & 1 \end{array} \right] \ \equiv \ \left[ \begin{array}{c|c} \Delta \underline{\underline{R}} & \underline{0} \\ \hline 0 \quad 0 \quad 0 & 1 \end{array} \right]$$

$$\text{RPY} (\ \Delta A, \ \Delta B, \ \Delta C\ ) \ = \ \text{Rot}(\ z, \ \Delta A\ ) \ \ \text{Rot}(\ y, \ \Delta B\ ) \ \ \text{Rot}(\ x, \ \Delta C\ )$$

$$= \begin{bmatrix} C_A C_B & -S_A C_C + C_A S_B S_C & S_A S_C + C_A S_B C_C \\ S_A C_B & C_A C_C + S_A S_B S_C & -C_A S_C + S_A S_B C_C \\ -S_B & C_B S_C & C_B C_C \end{bmatrix}$$

mit $C_A = \cos (\ \Delta A\ )$, $S_A = \sin (\ \Delta A)$ usw.

Die Reihenfolge von Translation und Rotation ist signifikant:

$$\text{Rot} \cdot \text{Trans} = \begin{bmatrix} \Delta\underline{R} & \vdots & \underline{0} \\ \text{---} & \text{+} & \text{--} \\ 0\ 0\ 0 & \vdots & 1 \end{bmatrix} \begin{bmatrix} \underline{I} & \vdots & \Delta\underline{p} \\ \text{---} & \text{+} & \text{--} \\ 0\ 0\ 0 & \vdots & 1 \end{bmatrix} = \begin{bmatrix} \Delta\underline{R} & \vdots & \Delta\underline{R}\Delta\underline{p} \\ \text{---} & \text{+} & \text{--} \\ 0\ 0\ 0 & \vdots & 1 \end{bmatrix}$$

$$\text{Trans} \cdot \text{Rot} = \begin{bmatrix} \Delta\underline{R} & \vdots & \Delta\underline{p} \\ \text{---} & \text{+} & \text{--} \\ 0\ 0\ 0 & \vdots & 1 \end{bmatrix}$$

Insgesamt erhält man daher sechs einfache Möglichkeiten der Anwendung dieser differentiellen Transformationen:

1. $T_{WZ'}{}^Z = \text{Trans Rot } T_{WZ}{}^{BEZ}$
2. $T_{WZ'}{}^{BEZ} = \text{Trans } T_{WZ}{}^{BEZ} \text{ Rot}$
3. $T_{WZ'}{}^{BEZ} = T_{WZ}{}^{BEZ} \text{ Trans Rot}$
4. $T_{WZ'}{}^{BEZ} = \text{Rot Trans } T_{WZ}{}^{BEZ}$
5. $T_{WZ'}{}^{BEZ} = \text{Rot } T_{WZ}{}^{BEZ} \text{ Trans}$
6. $T_{WZ'}{}^{BEZ} = T_{WZ}{}^{BEZ} \text{ Rot Trans}$

Dabei bedeutet jede Multiplikation von links, daß die betreffende Transformation in den Bezugskoordinaten ausgeführt wird, jede Multiplikation von rechts dagegen eine Operation in Greiferkoordinaten.

Die Kombination [Trans Rot] ist in der Praxis deutlich einfacher zu handhaben als [Rot Trans], da Translation und Rotation entkoppelt wirken. Somit sind nur noch die ersten drei Fälle von praktischem Interesse.

Die erste Form, [Trans Rot $T_{WZ}{}^{BEZ}$], stellt den bisher nicht implementierten Modus BMOV dar: Ein in Bezugskoordinaten beschriebenes Greiferkoordinatensystem wird zunächst um die Achsen des Bezugskoordinatensystems gedreht (Multiplikation mit Rot von links), dann in Bezugskoordinaten verschoben (Multiplikation mit Trans von links).

Die zweite Variante entspricht dem Modus TMOV: Alle Verschiebungen erfolgen in Bezugskoordinaten, alle Drehungen verwenden die Achsen des Greiferkoordinatensystems (Multiplikation mit Rot von rechts).

Der dritte Fall beschreibt den Modus MOV_TOOL: Zunächst wird in Greiferkoordinaten verschoben, dann um die Achsen des verschobenen Systems gedreht.

Der Modus MOV hat keine Entsprechung dieser einfachen Form. Wollte man die Rechenoperationen durch Multiplikation homogener Matrizen beschreiben, müßte man $T_{WZ}{}^{BEZ}$ erst einmal von seinem translatorischen Anteil befreien (in den Ursprung des Bezugskoordinatensystems verschieben), dann von links mit Rot multiplizieren, den translatorischen Anteil wieder zufügen und schließlich auch die Verschiebung Trans von links heranmultiplizieren. Erst durch Zusammenfassung der Sequenz aus Verschiebung in den Ursprung, Rotation und Rückverschiebung zu einer homogenen Matrix Rot* erhält man wieder einen einfachen Ausdruck:

7. $(T_{WZ'}{}^{BEZ})_{MOV} = \text{Trans Rot* } T_{WZ}{}^{BEZ}$

mit

$$\text{Rot}^* = \begin{bmatrix} \underline{I} & \vdots & \underline{p} \\ \text{---} & \text{+} & \text{--} \\ 0\ 0\ 0 & \vdots & 1 \end{bmatrix} \begin{bmatrix} \Delta\underline{R} & \vdots & \underline{0} \\ \text{---} & \text{+} & \text{--} \\ 0\ 0\ 0 & \vdots & 1 \end{bmatrix} \begin{bmatrix} \underline{I} & \vdots & -\underline{p} \\ \text{---} & \text{+} & \text{--} \\ 0\ 0\ 0 & \vdots & 1 \end{bmatrix} = \begin{bmatrix} \Delta\underline{R} & \vdots & -\Delta\underline{R}\,\underline{p} + \underline{p} \\ \text{---} & \text{+} & \text{--} \\ 0\ 0\ 0 & \vdots & 1 \end{bmatrix}$$

Betrachtet man translatorischen und rotatorischen Anteil innerhalb der homogenen Matrizen getrennt, kommt man allerdings zu einer effizienteren Rechenvorschrift (die in der ACR bereits implementiert ist).

## 4.3 Berechnung von Translation und Rotation

Die mit Hilfe homogener Matrizen dargestellten Transformationsvorschriften für die verschiedenen Modi dienen vor allem der analytischen Beschreibung. Für die numerische Implementation ist es sinnvoller, alle Matrizenmultiplikationen vorweg auszufuhren. Verschiebung und Drehung können dann mit deutlich weniger Rechenoperationen und getrennt voneinander berechnet werden.

Durch Partitionieren der aktuellen Greifermatrix $T_{WZ}{}^{BEZ}$ in einen rotatorischen Anteil $\underline{R}$ und einen translatorischen Anteil $\underline{p}$ erhält man:

$$(T_{WZ}{}^{,BEZ})_{BMOV} = \text{Trans Rot } T_{WZ}{}^{BEZ} = \left[\begin{array}{ccc|c} & \Delta\underline{R} & & \Delta\underline{p} \\ \hline 0\ 0\ 0 & & & 1 \end{array}\right] \left[\begin{array}{ccc|c} & \underline{R} & & \underline{p} \\ \hline 0\ 0\ 0 & & & 1 \end{array}\right]$$

$$= \left[\begin{array}{c|c} \Delta\underline{R}\,\underline{R} & \Delta\underline{R}\,\underline{p} + \Delta\underline{p} \\ \hline 0\ 0\ 0 & 1 \end{array}\right]$$

$$(T_{WZ}{}^{,BEZ})_{MOV} = \text{Trans Rot}^{\cdot} T_{WZ}{}^{BEZ} = \left[\begin{array}{c|c} \Delta\underline{R}\,\underline{R} & \underline{p} + \Delta\underline{p} \\ \hline 0\ 0\ 0 & 1 \end{array}\right]$$

$$(T_{WZ}{}^{,BEZ})_{TMOV} = \text{Trans } T_{WZ}{}^{BEZ} \text{ Rot} = \left[\begin{array}{ccc|c} & I & & \Delta\underline{p} \\ \hline 0\ 0\ 0 & & & 1 \end{array}\right] \left[\begin{array}{ccc|c} & \underline{R} & & \underline{p} \\ \hline 0\ 0\ 0 & & & 1 \end{array}\right] \left[\begin{array}{ccc|c} & \Delta\underline{R} & & \underline{0} \\ \hline 0\ 0\ 0 & & & 1 \end{array}\right]$$

$$= \left[\begin{array}{c|c} \underline{R}\,\Delta\underline{R} & \underline{p} + \Delta\underline{p} \\ \hline 0\ 0\ 0 & 1 \end{array}\right]$$

$$(T_{WZ}{}^{,BEZ})_{MOV\_TOOL} = T_{WZ}{}^{BEZ} \text{ Trans Rot} = \left[\begin{array}{ccc|c} & \underline{R} & & \underline{p} \\ \hline 0\ 0\ 0 & & & 1 \end{array}\right] \left[\begin{array}{ccc|c} & \Delta\underline{R} & & \Delta\underline{p} \\ \hline 0\ 0\ 0 & & & 1 \end{array}\right]$$

$$= \left[\begin{array}{c|c} \underline{R}\,\Delta\underline{R} & \underline{R}\,\Delta\underline{p} + \underline{p} \\ \hline 0\ 0\ 0 & 1 \end{array}\right]$$

Alle Gleichungen liefern ihr Ergebnis im Bezugssystem der am weitesten links stehenden Abbildungsmatrix. Welt-, Roboterfuß- und Basiskoordinaten ($WORLD, $ROBROOT, $BASE) sind gleichermaßen sinnvoll. Die Verwendung des Greiferkoordinatensystems wäre zwar formal korrekt (mit $\underline{R} = I$ und $\underline{p} = 0$), würde aber in allen vier Fällen nur noch greiferbezogene Bewegungen zulassen, scheidet hier also aus. Das Ergebnis der Berechnungen liegt somit immer in einem ortsfesten Koordinatensystem vor oder zumindest in in einem Koordinatensystem, dessen Bewegung von vornherein bekannt ist (bei Verwendung von $BASE mit Zusatzachsen).

Aus Gründen der Einheitlichkeit wurden die Gleichungen bis hierher mit differentiellen Translationen und Rotationen formuliert. Bei einigen Modi kann man jedoch auch mit absoluten Angaben arbeiten, d.h. in jedem Interpolationstakt nicht den Unterschied zum vorhergehenden Takt angeben, sondern den Unterschied zum Beginn der Bewegung. Dies gilt für alle Abbildungsgleichungen, in denen die differentiellen Werte immer in Bezugskoordinaten formuliert sind, d.h. einfach addiert oder von links heranmultipliziert werden.

Demnach kann man in den Modi BMOV und MOV sowohl die Rotation $\Delta\underline{R}$ als auch die Verschiebung $\Delta\underline{p}$ absolut angeben, im Modus TMOV immerhin noch die Verschiebung. Die Variante MOV_TOOL läßt dagegen nur differentielle Operationen zu, da sich das Bezugssystem WZ($\underline{R}$, $\underline{p}$) in jedem Interpolationstakt ändert.

**Mathematische Formulierung des greiferbezogenen Handverfahrens**

Nach der Formulierung des basisbezogenen Handverfahrens sind bereits alle notwendigen Grundlagen gelegt. Der einzige Unterschied besteht im Wechsel des Blickwinkels: anstelle der Bewegung des Frames WZ relativ zu BEZ gibt man nunmehr BEZ relativ zu WZ an, muß demnach die Gleichungen für die Änderung von einem Interpolationstakt zum nächsten folgendermaßen ansetzen:

1. $(T_{BEZ'}{}^{WZ})_{BMOV}$ = Trans Rot $T_{BEZ}{}^{WZ}$  (BMOV greiferbezogen)
2. $(T_{BEZ'}{}^{WZ})_{MOV}$ = Trans Rot* $T_{BEZ}{}^{WZ}$  (MOV greiferbezogen)
3. $(T_{BEZ'}{}^{WZ})_{TMOV}$ = Trans $T_{BEZ}{}^{WZ}$ Rot      (TMOV greiferbezogen)
4. $(T_{BEZ'}{}^{WZ})_{MOV\_TOOL}$ = $T_{BEZ}{}^{WZ}$ Trans Rot      (MOV_TOOL greiferbez.)

Der erste Fall (BMOV) ist nur der Vollständigkeit halber aufgeführt, er würde den Ursprung des Greiferkoordinatensystems zum Arbeitspunkt machen, was durch das greiferbezogene Handverfahren gerade vermieden werden soll. Ferner dürfte in der Praxis nur BEZ = BA sinnvoll sein (wie beim basisbezogenen BMOV).

Der Rechengang bei den anderen Modi deckt sich nahezu mit dem basisbezogenen Handverfahren. Es muß lediglich

1. zu Beginn des Handverfahrens die Startposition $T_{BEZ}{}^{WZ}$ bereitgestellt werden, d.h., falls gerade auf greiferbezogene Interpolation umgeschaltet wurde, ist $T_{BEZ}{}^{WZ}$ = $(T_{WZ}{}^{BEZ})^{-1}$ zu berechnen,

2. die greiferbezogen berechnete neue Position $T_{BEZ'}{}^{WZ}$ in jedem Interpolationstakt in eine basisbezogene Darstellung umgerechnet werden, $T_{WZ'}{}^{BEZ}$ = $(T_{BEZ'}{}^{WZ})^{-1}$.

Davon abgesehen können die oben abgeleiteten Gleichungen unverändert zum Einsatz kommen. Man erkennt die Verwandtschaft dieser Lösung zur greiferbezogenen Interpolation bei der Programmbearbeitung (Abschnitt 2.2), für die ebenfalls nur Frame-Inversionen bei der Satzaufbereitung (s. auch Abschnitt 7) und nach jedem Interpolationstakt eingeführt werden.

Man kann die Inversionen natürlich auch vorweg analytisch durchführen, so daß die Gleichungen in basisbezogener Darstellung vorliegen:

1. $(T_{WZ'}{}^{BEZ})_{BMOV}$ = $T_{WZ}{}^{BEZ}$ $(Rot)^{-1}$ $(Trans)^{-1}$
2. $(T_{WZ'}{}^{BEZ})_{MOV\_TOOL}$ = $T_{WZ}{}^{BEZ}$ $(Rot^*)^{-1}$ $(Trans)^{-1}$
3. $(T_{WZ'}{}^{BEZ})_{MOV}$ = $(Rot)^{-1}$ $T_{WZ}{}^{BEZ}$ $(Trans)^{-1}$
4. $(T_{WZ'}{}^{BEZ})_{TMOV}$ = $(Rot)^{-1}$ $(Trans)^{-1}$ $T_{WZ}{}^{BEZ}$

Die Inversionen der differentiellen Rotationen und Translationen gestalten sich relativ einfach, da nur die differentiellen Verschiebungen und Verdrehungen ($\Delta$x bis $\Delta$C) das Vorzeichen wechseln. Andererseits ist aber auch die Reihenfolge von Rotation und Translation vertauscht, man könnte also nicht die vorhandenen Algorithmen benutzen, sondern müßte neue ableiten und implementieren.

Zugunsten einer möglichst homogenen Struktur der Steuerung dürfte es daher günstiger sein, die Interpolation greiferbezogen durchzuführen, mit nachfolgender Inversion in jedem Interpolationstakt. Die basisbezogene Darstellung mag lediglich verdeutlichen, daß diese Handverfahr-Modi sich tatsächlich von den bisher vorhandenen unterscheiden und daß ein ortsfester Beobachter alle differentiellen Verschiebungen und Verdrehungen mit umgekehrtem Vorzeichen sieht.

**Transformation in roboterinterne Koordinaten**

Die in Bezugskoordinaten berechneten Positionen des Greiferkoordinatensystems ($T_{WZ'}{}^{BEZ}$) müssen zur Berechnung der Achssollwerte in roboterinterne Koordinaten umgerechnet werden. Da, wie oben dargelegt, die Bewegung des Bezugskoordinatensystems als bekannt vorausgesetzt werden kann, erhält man relativ einfache Transformationsvorschriften.

Mit der Abkürzung BEZ für das Bezugskoordinatensystem gilt allgemein

$$T_{WZ}{}^{BEZ} = T_{IRO}{}^{BEZ} T_{WZ}{}^{IRO} \Rightarrow T_{IRO}{}^{WZ} = (T_{IRO}{}^{BEZ})^{-1} T_{WZ}{}^{BEZ}$$

Die jeweils anzuwendende Transformationsmatrix folgt aus der nachstehenden Tabelle:

| BEZ | $T_{IRO}{}^{BEZ}$ | $(T_{IRO}{}^{BEZ})^{-1}$ |
|---|---|---|
| $BASE | $(T_{BA}{}^{WE})^{-1}$ $T_{RO}{}^{WE}$ $T_{IRO}{}^{RO}$ | $(T_{RO}{}^{WE}$ $T_{IRO}{}^{RO})^{-1}$ $T_{BA}{}^{WE}$ |
| $WORLD | $T_{RO}{}^{WE}$ $T_{IRO}{}^{RO}$ | $(T_{RO}{}^{WE}$ $T_{IRO}{}^{RO}$ $)^{-1}$ |
| $ROBROOT | $T_{IRO}{}^{RO}$ | $(T_{IRO}{}^{RO}$ $)^{-1}$ |

**Erzeugung der Geschwindigkeitsprofile**

Der zeitliche Verlauf von $\Delta x$, $\Delta y$, $\Delta z$, $\Delta A$, $\Delta B$ und $\Delta C$ kann für den neuen Modus BMOV in der gleichen Weise erzeugt werden wie bei den bestehenden Modi. Es ist keine Sonderbehandlung notwendig.

Konkret heißt dies, daß für jede Bewegungsrichtung (jede Komponente $\Delta x$ bis $\Delta C$) ein "Endlosprofil" berechnet wird, das nur aus einer Phase konstanter Geschwindigkeit besteht. Der Geschwindigkeitssprung zu Beginn und Ende der Bewegung wird von der Override-Regelung verschliffen.

Die genannten konstanten Geschwindigkeiten sind durch Maschinendaten vorgegeben und nur für die Komponenten wirksam, deren Verfahrtasten gedrückt gehalten werden. Alle anderen Komponenten sind Null.

**Patentansprüche**

**1.** Robotersteuerung mit einem greiferbezogenen Handverfahren, **dadurch gekennzeichnet,** daß der Drehpunkt bei Orientierungsänderungen immer im Ursprung eines Basiskoordinatensystems liegt.

FIG 1

FIG 2

FIG 3

FIG 4

Bild 1:  Führung des Werkzeugs über ein ortsfestes Werkstück

FIG 5

Bild 2:  Führung des Werkstücks über ein ortsfestes Werkzeug

FIG 6

FIG 7

**Bild 3:  Lernen der Bahn mit geführtem Werkstück**

FIG 8

**Bild 4: Lernen der Bahn mit fest aufgespanntem Werkstück**

Drehung um den Ursprung des
Greiferkoordinatensystems

Drehung um den Ursprung des
Basiskoordinatensystems

*FIG 9*

**Bild 6: Kartesisches Handverfahren mit Drehungen
um die Achsen des Basissystems**

MOV greiferbezogen

FIG 10 a

TMOV greiferbezogen

FIG 10 b

MOV_TOOL greiferbezogen

FIG 10 C

Bild 7: Greiferbezogene Handverfahr–Modi im Vergleich

RO ($ROBROOT)

WE ($WORLD)

BA ($BASE)

F/G 11

**Bild 8: Koordinatensysteme für das kartesische Handverfahren**